# EUROPÄISCHE PATENTSCHRIFT

(11) **EP 1 455 251 B1**
(45) Veröffentlichungstag und Bekanntmachung des Hinweises auf die Patenterteilung: **02.01.2008**
(21) Anmeldenummer: 04004164.2
(22) Anmeldetag: 25.02.2004
(51) Int. Cl.: G05B 19/042, G05B 23/02

(54) **Konfigurierbares Sicherheitsschaltgerät**
Configurable safety switching device
Commutateur de sécurité configurable

(30) Priorität: 03.03.2003 DE 10309098
(43) Veröffentlichungstag der Anmeldung: 08.09.2004
(73) Patentinhaber: Leuze electronic GmbH + Co KG, 73277 Owen/Teck (DE)
(72) Erfinder: Müller, Bernhard, Dr., 71083 Herrenberg (DE); Bauder, Frank, 72660 Beuren (DE)
(74) Vertreter: Ruckh, Rainer Gerhard

(56) Entgegenhaltungen:
- EP-A- 0 600 311
- DE-A- 10 024 316
- DE-A- 19 707 241
- DE-A- 19 927 635

## Beschreibung

Die Erfindung betrifft ein Verfahren gemäß dem Oberbegriff des Anspruchs 1.

Derartige Verfahren dienen generell zur Steuerung von sicherheitsrelevanten Prozessen von Arbeitsgeräten wie Maschinen und Anlagen mittels eines Steuerungssystems. Die Arbeitsgeräte werden dabei in Abhängigkeit der Schalterzustände von Sicherheitsbauteilen aktiviert und deaktiviert. Die Sicherheitsbauteile können von Optosensoren, wie zum Beispiel Lichtschranken und Lichtgittern, gebildet sein, die das Vorfeld eines derartigen Arbeitsgeräts überwachen. Weiterhin können die Sicherheitsbauteile von Not-Aus-Schaltern und dergleichen gebildet sein. Mit diesen kann das Arbeitsgerät manuell außer Betrieb gesetzt werden, um Gefahrenzustände zu vermeiden.

Die Aktivierung und Deaktivierung des Arbeitsgeräts erfolgt über eine Monitoreinheit, welche hierzu die Schaltzustände der Sicherheitsbauteile auswertet.

Das Steuerungssystem kann insbesondere von einem Bussystem gebildet sein. Ein derartiges Bussystem ist aus der DE 198 15 147 A1 bekannt. Hierbei handelt es sich um ein nach dem Master-Slave-System ausgebildetes Bussystem. Das geforderte Sicherheitsniveau wird dabei durch eine von einer redundanten Auswerteeinheit gebildeten Monitoreinheit gebildet, welche die über das Bussystem übertragenen Signale zur Ermittlung der Schaltzustände der Sicherheitsbauteile abhört.

Anlagen mit derartigen Steuerungssystemen werden in großer Anzahl produziert, wobei je nach Applikation die Ausbildung des Steuerungssystems variieren kann. Dabei kann insbesondere je nach durchzuführender Überwachung der Arbeitsgeräte die Anzahl und Anordnung der an das Steuerungssystem angeschlossenen Sicherheitsbauteile variieren. Insbesondere kann auch der Fall eintreten, dass die Anordnung der Sicherheitsbauteile innerhalb des Steuerungssystems bei einer Veränderung des oder der Arbeitsgeräte, beispielsweise durch nachträgliche Anbauten, verändert werden muss.

Damit ein sicherer Betrieb des Steuerungssystems zur Gewährleistung der vollständigen Überwachung der Arbeitsgeräte gewährleistet ist, muss sichergestellt werden, dass der Schaltplan des Steuerungssystems mit den angeschlossenen Sicherheitsbauteilen überprüft wird und korrekt in der Monitoreinheit hinterlegt ist, damit die Deaktivierung und Aktivierung der Arbeitsgeräte in Abhängigkeit der Schaltzustände der Sicherheitsbauteile korrekt vorgenommen werden kann.

Bei Änderungen des Steuerungssystems muss hierzu von dem Inbetriebnehmer dieser Anlage der gesamte Schaltplan des Steuerungssystems manuell überprüft und freigegeben werden, bevor das Steuerungssystem den Betrieb aufnehmen kann.

Dies ist nicht nur äußerst umständlich und zeitaufwendig. Vielmehr birgt diese Vorgehensweise erhebliche Fehlerquellen, da die manuelle Durchsicht des Schaltplans eine Prüfung einer Vielzahl von Schaltungsdetails beinhaltet, die auch für geübtes Personal nur schwer durchführbar ist.

Aus der DE 199 27 635 A1 ist ein Automatisierungssystem bekannt, welches ein Bussystem, daran angeschlossene E/A-Busteilnehmer und eine Standardsteuerungseinrichtung, sowie wenigstens einen Sicherheitsanalysator, welcher den Datenfluss über das Bussystem mithört und zum Ausführen zumindest einer sicherheitsbezogenen Funktion ausgebildet ist, umfasst. Die Standardsteuerungseinrichtung steuert zumindest einen sicherheitsbezogenen Ausgang. Der Sicherheitsanalysator ist zum Überprüfen und/oder Verarbeiten von sicherheitsbezogenen Daten im Busdatenstrom eingerichtet.

Der Erfindung liegt die Aufgabe zugrunde ein Verfahren der eingangs genannten Art bereitzustellen, welches mit möglichst geringem Aufwand geändert und erweitert werden kann, ohne dass dessen Sicherheitsfunktion dadurch beeinträchtigt wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zur Steuerung von sicherheitsrelevanten Prozessen wenigstens eines Arbeitsgeräts mittels eines Steuerungssystems mit wenigstens einer Monitoreinheit, mittels derer in Abhängigkeit von Schaltzuständen von Sicherheitsbauteilen das Arbeitsgerät aktivierbar oder deaktivierbar ist, wobei die maximale Anzahl von anschließbaren Sicherheitsbauteilen eine Maximalkonfiguration bildet. An die Monitoreinheit ist ein Inbetriebnahmemodul anschließbar. In der Monitoreinheit und/oder in dem Inbetriebnahmemodul ist eine Optionsliste mit einer Anzahl von Optionen abgespeichert, wobei jede Option eine innerhalb der Maximalkonfiguration liegende Erweiterung einer Basiskonfiguration bildet, die durch eine Teilmenge der Maximalkonfiguration definiert ist. In dem Inbetriebnahmemodul ist eine Option aus der Optionsliste zur Generierung einer aktuellen Konfiguration für den Betrieb des Steuerungssystems auswählbar, wobei die Gültigkeit der Konfiguration in der Monitoreinheit überprüft wird.

Der Grundgedanke der Erfindung besteht darin, dass der Konstrukteur, der das Steuerungssystem mit dem sicherheitskritischen Teil der Monitoreinheit entwirft, sämtliche an das Steuerungssystem anschließbaren Sicherheitsbauteile als Maximalkonfiguration in der Monitoreinheit hinterlegt. Weiterhin ist durch den Konstrukteur in der Monitoreinheit die Basiskonfiguration des Steuerungssystems hinterlegt, die die einfachste Ausführungsform einer möglichen Konfiguration von an das Steuerungssystem angeschlossenen Sicherheitsbauteilen bildet. Weiterhin sind durch den Konstrukteur in Form von Optionslisten in der Monitoreinheit Optionen hinterlegt, welche Variationen, insbesondere Erweiterungen bezüglich der Basiskonfiguration, enthalten. Dabei können in einer Option Sicherheitsbauteile zu den Sicherheitsbauteilen der Basiskonfiguration hinzugefügt werden oder auch entfernt werden.

Wird dann beispielsweise durch eine Nachrüstung der Arbeitsgeräte, die mit dem Steuerungssystem überwacht werden sollen, eine Änderung der Konfiguration der an das Steuerungssystem anschließbaren Sicherheitsbauteile nötig, so kann diese von einem Servicetechniker oder einen Inbetriebnehmer mittels des Inbetriebnahmemodul halbautomatisch und damit mit äußerst geringem Aufwand bei gleichzeitig hoher Fehlersicherheit durchgeführt werden.

Hierzu gibt der Inbetriebnehmer oder Servicetechniker, nachdem vorzugsweise die Maximalkonfiguration und die Optionsliste von der Monitoreinheit in das Inbetriebnahmemodul eingelesen wurde, die jeweilige Option, die an die gewünschte Nachrüstung der Arbeitsgeräte angepasst ist, in das Inbetriebnahmemodul ein.

Da durch die Hinterlegung der Maximalkonfiguration, der Basiskonfiguration und der Optionslisten sämtliche möglichen Ausbaustufen des Steuerungssystems in der Monitoreinheit hinterlegt sind, kann nach Einlesen der in das Inbetriebnahmemodul eingegebenen Option in die Monitoreinheit dort auf einfache Weise selbsttätig eine Überprüfung durchgeführt werden, ob die Konfigurationen auf der Basis der ausgewählten Option gültig ist. Nach erfolgreicher Überprüfung der Konfiguration durch die Monitoreinheit gibt der Inbetriebnehmer und der Servicetechniker die gewählte Option frei.

Dabei wird von dem Inbetriebnehmer oder dem Servicetechniker nach Eingabe der Option in der Monitoreinheit eine Download-Prozedur zur Implementierung der der Option entsprechenden Konfiguration der Sicherheitsbauteile in der Monitoreinheit generiert. Hierbei wird in der Monitoreinheit selbsttätig eine Maschinenkonfigurationsdatei generiert, welche dem aktuellen Schaltplan mit dem entsprechend der gewählten Option angeschlossenen Sicherheitsbauteil entspricht.

Von der Monitoreinheit wird als Ergebnis der durchgeführten Download-Prozedur die Maschinenkonfigurationsdatei und eine Optionsdatei mit der gewählten Option ausgegeben. Der Inbetriebnehmer oder Servicetechniker kann die Entscheidung über die Freigabe der geänderten Konfiguration der Sicherheitsbauteile allein anhand der Überprüfung der Optionsliste vornehmen. Eine Überprüfung des gesamten Schaltplans, das heißt der Maschinenkonfigurationsdatei ist hierzu nicht erforderlich. Die Maschinenkonfigurationsdatei wird von der Monitoreinheit vielmehr allein zu Dokumentationszwecken ausgegeben.

Der manuelle Aufwand zur Änderung der Konfiguration des Steuerungssystems wird damit äußerst gering gehalten, da nur die jeweilige Option vom Inbetriebnehmer oder Servicetechniker in das Inbetriebnahmemodul eingegeben und am Ende des Konfigurationsvorgangs manuell geprüft werden muss. Die auf der Basis der eingegebenen Option vorgenommene Änderung des Schaltplans des Steuerungssystems und damit verbunden die Änderung des Umfangs der Sicherungsfunktion der Monitoreinheit wird in der Monitoreinheit anhand der dort hinterlegten Daten, nämlich der Maximalkonfiguration, Basiskonfiguration und der Optionsliste, selbsttätig durchgeführt. Dadurch wird insbesondere auch die Fehlersicherheit bei der Änderung des Steuerungssystems erheblich erhöht.

In einer alternativen, vereinfachten Ausgestaltung der Erfindung braucht die Maximalkonfiguration nicht in der Monitoreinheit abgespeichert sein. Der Inbetriebnehmer wählt mit dem Inbetriebnahmemodul eine Option aus. Darauf wird in der Monitoreinheit die entsprechende Konfiguration zum Betrieb des Steuerungssystems zusammen mit einer Prüfziffer generiert. Die Gültigkeit der Konfiguration kann automatisiert im Steuerungssystem oder im einfachsten Fall manuell von einer Bedienperson geprüft werden, in dem die Prüfziffer mit einem Sollwert verglichen wird.

Die Erfindung wird im Nachstehenden anhand der Zeichnungen erläutert. Es zeigen:
- Figur 1:: Schematische Darstellung eines Steuerungssystems zur Steuerung sicherheitsrelevanter Prozesse.
- Figur 2:: Schematische Darstellung eines mittels des Steuerungssystems gemäß Figur 1 überwachten Arbeitsgerätes
a) in einer Basisversion.
b) in einer erweiterten Version.
- Figur 3:: Beispiel einer Maximalkonfiguration mit zugeordneter Basiskonfiguration und Optionsliste für das Arbeitsgerät gemäß Figur 2.

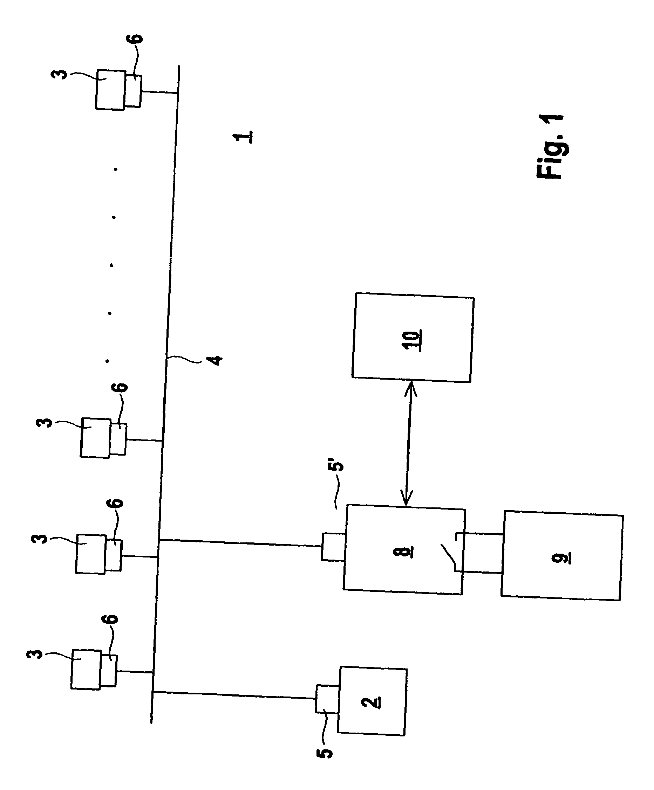

Figur 1 zeigt ein Ausführungsbeispiel eines Steuerungssystems 1 zur Steuerung sicherheitsrelevanter Prozesse. Das Steuerungssystem 1 ist im vorliegenden Fall von einem Bussystem gebildet, welches nach dem Master-Slave-Prinzip arbeitet. Das Bussystem weist einen Master auf, der beispielsweise in einer SPS-Steuerung 2 integriert ist. An den Master sind Slaves bildende Sicherheitsbauteile 3 über Busleitungen 4 angeschlossen. Der Master fragt die einzelnen Slaves unter vorgegebenen Adressen zyklisch ab, worauf jeder Slave eine Antwort an den Master sendet.

Im vorliegenden Fall ist das Bussystem vom ASi-Bussystem gebildet. Das ASi-Bussystem ist besonders für den Anschluss von binären Sensoren und Aktoren konzipiert. Die Funktionsweise des ASi-Bussystems ist in "ASI - Das Aktuator Sensor Interface für die Automation", Werner Kriesel, Otto W. Madelung, Carl Hanser Verlag, 1994 beschrieben, dessen Inhalt in den Offenbarungsgehalt dieser Anmeldung miteinbezogen wird.

Die über das Bussystem übertragenen Daten sind Manchester-kodiert und werden als alternierende, sin²-förmige Spannungsimpulse über die Busleitungen 4 gesendet.

Hierzu ist dem Master eine Analogschaltung 5 nachgeordnet, welche ein jeweils nicht dargestelltes Sendeelement und ein Empfangselement aufweist. Im Sendeelement werden die binären Daten eines Masteraufrufs in eine Folge von sin²-förmigen Spannungsimpulse umgewandelt. Diese Signale werden über die Busleitungen 4 an die Slaves gesendet. Die von den Slaves über die Busleitungen 4 an den Master gesendeten Signale werden in dem Empfangselement in binäre Datenfolgen umgewandelt.

Jedem Slave ist ein Schnittstellenbaustein 6 zugeordnet, der in dem vorliegenden Beispiel von einem ASi-IC gebildet ist. Im Schnittstellenbaustein 6 werden die über die Busleitung 4 empfangenen Folgen von sin²-förmigen Spannungspulsen in binäre Daten gewandelt.

Des Weiteren wird im Schnittstellenbaustein 6 die in Form von binären Daten vorliegende Slaveantwort in eine Folge von sin²-förmigen Spannungsimpulsen gewandelt und über die Busleitungen 4 an den Master gesendet.

Mit dem Steuerungssystem 1 wird als sicherheitsrelevanter Prozess der Betrieb eines Arbeitsgerätes 7 gesteuert. Dabei wird das Arbeitsgerät 7 in Abhängigkeit der von den Sicherheitsbauteilen 3 generierten Signalen aktiviert oder deaktiviert. Die Sicherheitsbauteile 3 sind dabei vorzugsweise binär schaltende Sicherheitsschalter, deren Schaltzustände zur Steuerung des Arbeitsgerätes 7 verwendet werden. Derartige Sicherheitsschalter können von Optosensoren, wie zum Beispiel Lichtschranken, gebildet sein, mittels derer ein Eindringen von Objekten in einen Gefahrenbereich überwacht werden kann.

Zur Erfüllung des geforderten Sicherheitsniveaus des Bussystems ist eine Monitoreinheit 8 vorgesehen, die im Wesentlichen aus einer redundant aufgebauten Rechnereinheit besteht. Die Monitoreinheit 8 ist über eine weitere Analogschaltung 5' an das Bussystem angeschlossen. Die Monitoreinheit 8 bildet weder einen Master noch einen Slave, sondern stellt einen rein passiven Busteilnehmer dar, der fortlaufend die über die Busleitungen 4 übertragenen Signale abhört. Insbesondere werden dadurch die Schaltzustände der Sicherheitsbauteile 3 in die Monitoreinheit 8 eingelesen. In Abhängigkeit der Schaltzustände der Sicherheitsbauteile 3 wird in der Monitoreinheit 8 ein Schaltsignal generiert, welches zur Aktivierung oder Deaktivierung des Arbeitsgerätes 7 über einen sicheren Schaltausgang 9 ausgegeben wird.

Die Anordnung gemäß Figur 1 umfasst ein Arbeitsgerät 7 und eine Monitoreinheit 8. Das Bussystem kann generell dahingehend erweitert sein, dass an dieses mehrere Arbeitsgeräte 7 sowie mehrere Monitoreinheiten 8 angeschlossen sind.

Zur Konfigurierung des Bussystems kann, wie in Figur 1 dargestellt, ein Inbetriebnahmemodul 10 an die Monitoreinheit 8 angeschlossen werden. Das Inbetriebnahmemodul 10 ist beispielsweise von einem Personalcomputer gebildet.

Eine derartige neue Konfiguration des Bussystems wird beispielsweise dann notwendig, wenn das Arbeitsgerät 7 umgebaut oder erweitert wird, so dass die Anzahl und Anordnung der Sicherheitsbauteile 3 zur Überwachung des Arbeitsgerätes 7 geändert werden muss.

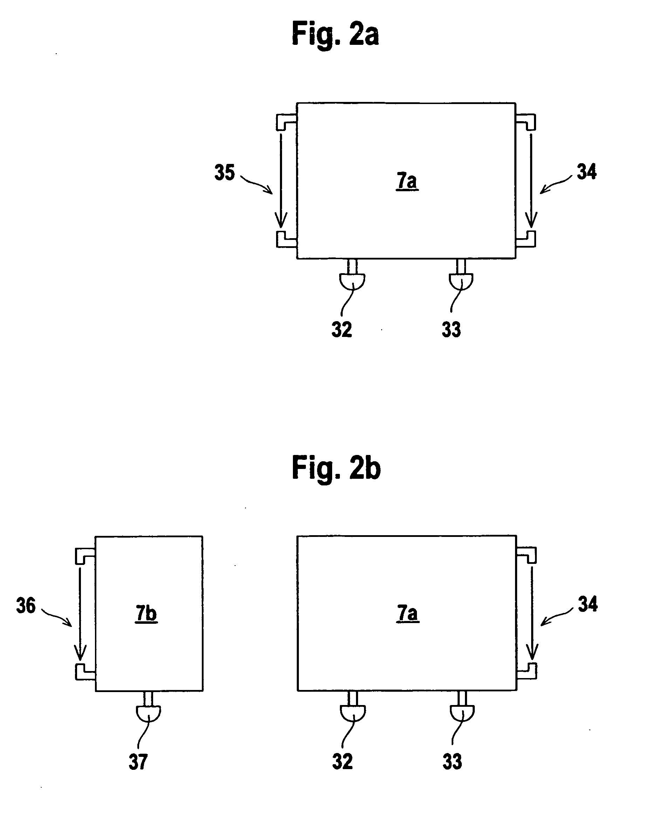

Ein Beispiel hierfür ist in Figur 2 schematisch dargestellt. In einer Basisversion (Figur 2a) besteht das Arbeitsgerät 7 aus einer Maschine 7a. Zur Überwachung dieser Maschine 7a sind vier Sicherheitsbauteile 32 - 35 vorgesehen. Als erste Sicherheitsbauteile 32, 33 sind mechanisch betätigbare Not-Aus-Schalter vorgesehen, mittels derer die Maschine 7a im Gefahrenfall manuell deaktiviert werden kann. Die Rückseite der Maschine 7a wird mittels eines ersten Lichtgitters als weiterem Sicherheitsbauteil 34 überwacht. Die Frontseite der Maschine 7a wird mittels eines zweiten Lichtgitters als weiterem Sicherheitsbauteil 35 überwacht.

Die Basisversion des Arbeitsgeräts 7 kann wie in Figur 2b dargestellt dadurch erweitert werden, dass vor der Maschine 7a ein Förderband 7b installiert wird.

In dieser erweiterten Version wird das Lichtgitter 35 zur Gefahrenbereichsüberwachung nicht mehr benötigt und wird daher von der Maschine 7a entfernt. Dafür wird ein Lichtgitter zur Überwachung des Einlaufs des Förderbandes 7b als weiteres Sicherheitsbauteil 36 benötigt, zudem wird ein weiterer Not-Aus-Schalter als zusätzliches Sicherheitsbauteil 37 benötigt.

Damit die sicherheitsrelevanten Funktionen des Bussystems auch in der erweiterten Version des Arbeitsgeräts 7 gewährleistet sind, muss die geänderte Konfiguration der das Arbeitsgerät 7 überwachenden Sicherheitsbauteile 32 - 34, 36, 37 in der Monitoreinheit 8 implementiert werden.

Diese Funktion wird von einem Inbetriebnehmer, der die Anlage gemäß Figur 1 in Betrieb nimmt, oder einem Servicetechniker, der zum Umbau des Arbeitsgerätes 7 befugt ist, mittels des Inbetriebnahmemoduls 10 wahrgenommen.

Dabei wird die Konfiguration der Komponenten des Bussystems über die Inbetriebnahmemodule 10 ausgelöst und in der Monitoreinheit 8 selbsttätig, das heißt automatisiert durchgeführt.

Um eine derartige weitgehend automatisierte Konfiguration des Bussystems, insbesondere der anzuschließenden Sicherheitsbauteile 3 zu gewährleisten, ist in der Monitoreinheit 8 eine Maximalkonfiguration abgespeichert, die eine Liste aller Sicherheitsbauteile 3 enthält, die dem Arbeitsgerät 7 in allen seinen möglichen Variationen und Ausbaustufen zugeordnet sein können.

Weiterhin ist in der Monitoreinheit 8 eine Basiskonfiguration hinterlegt, welche die Sicherheitsbauteile 3 definiert, die dem Arbeitsgerät 7 in seiner Basisversion zugeordnet sind.

Schließlich ist in der Monitoreinheit 8 eine Optionsliste mit Optionen hinterlegt. Die einzelnen Optionen definieren die Sicherheitsbauteile 3, die den Arbeitsgeräten 7 in seinen verschiedenen Varianten und Ausbaustufen zugeordnet sind. Wesentlich dabei ist, dass die Optionen der Optionsliste sämtliche möglichen Varianten und Ausbaustufen abdecken.

Die Maximalkonfiguration enthält alle Sicherheitsbauteile 3, die dem Arbeitsgerät 7 zur Gewährleistung von Sicherheitsfunktionen zugeordnet werden können. Die Basiskonfiguration und die Optionsliste definieren sämtliche Anschlusskombinationen der Sicherheitsbauteile 3 für die unterschiedlichen Varianten und Ausbaustufen des Arbeitsgerätes 7 und enthalten somit sämtliche möglichen Schaltplanvarianten des Gesamtsystems. Diese Daten werden von dem Konstrukteur, der das sicherheitsrelevante System konzipiert, in der Monitoreinheit 8 als Datenbasis hinterlegt.

Der Inbetriebnehmer oder Servicetechniker wählt über das Inbetriebnahmemodul 10 die jeweils gewünschte Option aus. Hierzu werden vorzugsweise die Maximalkonfiguration, die Basiskonfiguration und die Optionsliste von der Monitoreinheit 8 in das Inbetriebnahmemodul 10 eingelesen. Durch eine über das Inbetriebnahmemodul 10 ausgelöste Download-Prozedur wird die ausgewählte Option in der Monitoreinheit 8 implementiert und der hierzu gehörende Schaltplan als Maschinenkonfigurationsdatei selbsttätig generiert. Wesentlich hierbei ist, dass in der Monitoreinheit 8 die Gültigkeit der in der Inbetriebnahmemodul 10 ausgewählten Konfiguration überprüft wird, wobei nur eine gültig ausgewählte Konfiguration in der Monitoreinheit 8 implementiert wird.

In einer bevorzugten Ausführungsform wird die in die das Inbetriebnahmemodul 10 eingegebene Option in der Monitoreinheit 8 mit den dort hinterlegten Optionen der Optionsliste zur Überprüfung der Gültigkeit der aktuellen Konfiguration verglichen.

Die durch die Download-Prozedur generierte Maschinenkonfigurationsdatei, die dem die Option beinhaltenden Schaltplan der geänderten Anlage entspricht, wird zu Dokumentationszwecken ausgegeben. Zusätzlich wird eine Optionsdatei ausgegeben, welche die in der Monitoreinheit 8 implementierte, mittels des Inbetriebnahmemoduls 10 ausgewählte Option dokumentiert. Zur Freigabe der in der Monitoreinheit 8 generierten Konfiguration der Sicherheitsbauteile 3 braucht der Inbetriebnehmer oder Servicetechniker nur die Optionsdatei, nicht jedoch den gesamten in der Monitoreinheit 8 selbsttätig generierten Schaltplan in Form der Maschinenkonfigurationsdatei kontrollieren.

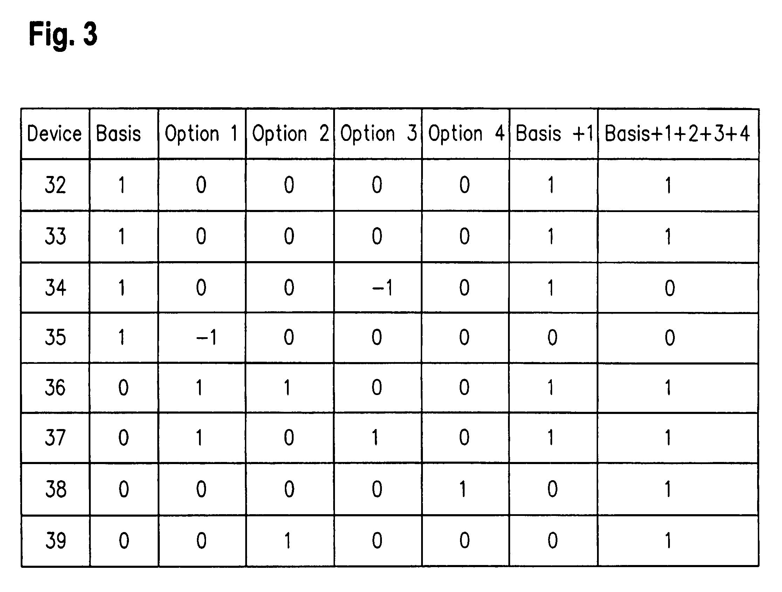

Die Konfiguration des Bussystems wird im Folgenden anhand dem Ausführungsbeispiel gemäß Figur 2 sowie der in Figur 3 dargestellten Maximalkonfiguration, Basiskonfiguration und Optionsliste für diese Anordnung erläutert.

In der ersten Spalte der Tabelle in Figur 3, welche mit "Device" bezeichnet ist, ist die Maximalkonfiguration für die Anordnung gemäß Figur 2 aufgeführt. Die zweite, mit "Basis" bezeichnete Spalte in der Tabelle definiert die Basiskonfiguration. Die mit Option 1 bis Option 4 bezeichneten Spalten definieren Optionen, die die Optionsliste bilden.

Im vorliegenden Fall umfasst die Maximalkonfiguration einer Anlage gemäß Figur 2 insgesamt acht Sicherheitsbauteile 3, die in Figur 3 mit den Bezugsziffern 32 - 39 bezeichnet sind. Die Maximalkonfiguration definiert dabei die maximale Anzahl von Sicherheitsbauteilen 3 die der Anlage gemäß Figur 2 in ihren möglichen Varianten und Ausbaustufen zugeordnet werden kann. Die Basiskonfiguration in der Spalte "Basis" von Figur 3 definiert die Basisversion, in welcher allein die Maschine 7a gemäß Figur 2 das Arbeitsgerät 7 bildet.

In dieser Basisversion sind nur die von den Lichtgittern und den Not-Aus-Schaltern gebildeten Sicherheitsbauteile 32 - 35 dem Arbeitsgerät 7 zugeordnet, nicht jedoch die weiteren in der Maximalkonfiguration enthaltenen Sicherheitsbauteile mit den Bezugsziffern 36 - 39.

Die Basiskonfiguration ist, wie aus Figur 3 ersichtlich, als Basiswertfolge von binären Werten 0 und 1 gebildet, die den einzelnen Sicherheitsbauteilen 32 - 39 der Maximalkonfiguration zugeordnet sind. Da die Not-Aus-Schalter 32, 33 und Lichtgitter dem von der Maschine 7a in der Basisversion gebildeten Arbeitsgerät 7 (Figur 2a) zugeordnet sind, nicht jedoch die Sicherheitsbauteile 36 - 39, weisen die den Sicherheitsbauteilen 32 - 35 zugeordneten Elemente der Basiswertfolge jeweils den Wert 1 auf. Dagegen weisen die den Sicherheitsbauteilen 36 - 39 zugeordneten Elemente der Basiswertfolge jeweils den Wert 0 auf.

Zum Betrieb des Arbeitsgeräts 7 in der Basisversion wird keine der in Figur 3 dargestellten Optionen ausgewählt, so dass durch eine Download-Prozedur in der Monitoreinheit 8 als Schaltplan eine Maschinenkonfigurationsdatei generiert wird, die nur die Sicherheitsbauteile 32 - 35 als dem Arbeitsgerät 7 zugeordnete Überwachungselemente enthält.

Die Optionen 1 - 4 in Figur 3 definieren verschiedene Ausbaustufen der Basisversion des Arbeitsgerätes 7 gemäß Figur 2.

Die Option 1 definiert die Ausbaustufe gemäß Figur 2, gemäß derer die Maschine 7a mit dem vorgeordneten Förderband 7b erweitert wird.

Die Option 2 definiert eine Erweiterung, bei welcher zusätzlich zur Maschine 7a ein Be-/Entladewagen vorgesehen ist.

Die Option 3 definiert eine Erweiterung, bei welcher zusätzlich zur Maschine 7a eine Lager-Schnittstelle vorgesehen ist.

Die Option 4 definiert eine Erweiterung, bei welcher zusätzlich zur Maschine 7a eine Beladeeinheit vorgesehen ist.

Die Spalten Option 1 bis Option 4 bilden jeweils eine Optionswertfolge, deren Elemente die Werte -1, 0 und +1 aufweisen. Jedes dieser Elemente ist einem Element der Basiswertfolge zugeordnet.

Wird das Arbeitsgerät 7 wie in Figur 2a dargestellt von der Basisversion ausgehend dahingehend erweitert, dass zusätzlich zur Maschine 7a ein Förderband 7b vorgesehen wird (Figur 2b), wird durch den Inbetriebnehmer oder den Servicetechniker auch die Anordnung der Sicherheitsbauteile 32 - 37 an dem Arbeitsgerät 7 geändert. Während die von dem Lichtgitter und den Not-Aus-Schaltern gebildeten Sicherheitsbauteile 32 - 34 an der Maschine 7a verbleiben, werden das vom Lichtgitter an der Frontseite der Maschine 7a gebildete Sicherheitsbauteil 35 entfernt und zur Überwachung des Förderbands 7b zusätzlich die Sicherheitsbauteile 36, 37 an das Arbeitsgerät 7 montiert.

Diese Änderung der Konfiguration der Sicherheitsbauteile 32 - 37 muss im Schaltplan in der Monitoreinheit 8 berücksichtigt werden, damit von dieser die sicherheitsrelevanten Prozesse wahrgenommen werden können.

Vor Inbetriebnahme des Arbeitsgeräts 7 schließt hierzu der Inbetriebnehmer das Inbetriebnahmemodul 10 an die Monitoreinheit 8 an. Die in der Monitoreinheit 8 hinterlegten Parameter, nämlich die Maximalkonfiguration, die Basiskonfiguration und die Optionsliste gemäß Figur 3 werden in das Inbetriebnahmemodul 10 eingelesen.

Zur Änderung der Konfiguration wird an dem Inbetriebnahmemodul 10 die Optionsliste mit dem aktuellen Status gemäß der Tabelle 1 angezeigt.

**Tabelle 1 :**

| Option | Text | aktiviert | deaktiviert |
|---|---|---|---|
| 1 | Förderband | | X |
| 2 | Be-/Entladewagen | | X |
| 3 | Lager-Schnittstelle | | X |
| 4 | Beladeeinheit | | X |

Wie aus Tabelle 1 ersichtlich werden dem Inbetriebnehmer mit einem entsprechenden Text, die zur Verfügung stehenden Optionen angezeigt. Weiterhin wird der aktuelle Status angezeigt, dass keine der Optionen aktiviert ist, das heißt das Arbeitsgerät 7 in der Basisversion realisiert ist.

Um die notwendige Schaltplanänderung in der Monitoreinheit 8 vorzunehmen, braucht der Inbetriebnehmer lediglich die Option 1 auszuwählen, das heißt der Inbetriebnehmer muss lediglich wissen, dass das Arbeitsgerät 7 mit einem Förderband 7b erweitert wird und dies im Menü gemäß Tabelle 1 entsprechend vermerken.

Hierzu braucht der Inbetriebnehmer lediglich die Option 1 von deaktiviert auf aktiviert setzen. Darauf wird die gewählte Option 1 in der Monitoreinheit 8 geladen und von dem Inbetriebnahmemodul 10 aus in der Monitoreinheit 8 eine Download-Prozedur zur Implementierung von Option 1 gestartet.

Zunächst wird in der Monitoreinheit 8 geprüft, ob es sich bei der ausgewählten Option um eine gültige Option handelt. Dann gemäß Figur 3 die Option 1 aktiviert, wodurch die Basiskonfiguration entsprechend modifiziert wird. Die Optionswertfolge von Option 1 enthält die Werte -1, 0. +1. Mit dem Wert - 1 wird das zugeordnete Element der Basiswertfolge auf den Wert 0 geändert. Mit dem Wert +1 wird das zugeordnete Element der Basiswertfolge auf den Wert 1 geändert. Mit dem Wert 0 wird der Wert des zugeordneten Elements der Basiswertfolge unverändert belassen. Das Ergebnis dieser Änderung der Basiskonfiguration ist in der Spalte "Basis +1" in Figur 3 dargestellt. Diese Spalte enthält somit die Konfiguration der Sicherheitsbauteile 3 für die mit der Option 1 erweiterten Basiskonfiguration.

Wie aus Figur 2b ersichtlich bleiben bei dem erweiterten Arbeitsgerät 7 (Figur 2b) gegenüber der Basisversion von Figur 2a die Sicherheitsbauteile 32 - 34 unverändert, wogegen das Sicherheitsbauteil 35 entfernt wird und die Sicherheitsbauteile 36, 37 hinzukommen. Dementsprechend weist die Optionswertfolge von Option 1 folgende Wertbelegung auf:
- Die den Sicherheitsbauteilen 32 - 34 zugeordneten Elemente weisen jeweils den Wert 0 auf.
- Das dem Sicherheitsbauteil 35 zugeordnete Element weist den Wert -1 auf.
- Die den Sicherheitsbauteilen 36, 37 zugeordneten Elemente weisen jeweils den Wert +1 auf.

Die entsprechend Option 1 geänderte Basiskonfiguration führt zu der Konfiguration von Sicherheitsbauteilen 3 gemäß der Spalte "Basis + 1", welcher der Anordnung der Sicherheitsbauteile 3 entspricht, das heißt die Sicherheitsbauteile 32 - 34 und 36, 37 sind zur Überwachung des Arbeitsgerätes 7 gemäß Figur 2b vorgesehen. Diese Konfiguration wird in der Monitoreinheit 8 selbsttätig generiert.

Alternativ oder zusätzlich könnte der Inbetriebnehmer auch die Optionen 2 - 4 auswählen, so dass dann gemäß den Spalten "Option 2" bis "Option 4" in Figur 3 die Basiskonfiguration entsprechend geändert wird. Die Spalte "Basis + 1 + 2 + 3 + 4" in Figur 3 zeigt die Konfiguration der Sicherheitsbauteile 3 bei Auswahl aller Optionen 1 - 4.

Nach durchgeführter Download-Prozedur wird für den Inbetriebnehmer die Maschinenkonfigurationsdatei mit dem gültigen Schaltplan des Steuerungssystems 1, insbesondere mit der Anordnung der Sicherheitsbauteile 3 gemäß Spalte "Basis +1" in Figur 3 zu Dokumentationszwecken ausgegeben.

Weiterhin erhält der Inbetriebnehmer als Quittierung der von ihm durchgeführten Konfiguration eine Optionsdatei, die die durchgeführte Optionsauswahl belegt.

Im vorliegenden Fall weist die Optionsdatei im Wesentlichen den Inhalt gemäß Tabelle 2 auf.

**Tabelle 2:**

| Option | Text | aktiv |
|---|---|---|
| 1 | Förderband | ja |
| 2 | Be-/Entladewagen | nein |
| 3 | Lager-Schnittstelle | nein |
| 4 | Beladeeinheit | nein |

Der Inbetriebnehmer muss für die Freigabe des Steuerungssystems 1 in der geänderten Konfiguration nur diese Optionsdatei, nicht jedoch den gesamten Schaltplan der Anordnung prüfen.

### Bezugszeichenliste

- (1): Steuerungssystem
- (2): Steuerung
- (3): Sicherheitsbauteile
- (4): Busleitungen
- (5, 5'): Analogschaltung
- (5): Schnittstellenbaustein
- (6): Arbeitsgerät
- (7a): Maschine
- (7b): Förderband
- (7): Monitoreinheit
- (8): Schaltausgang
- (9): Inbetriebnahmemodul

- (32-35): Sicherheitsbauteile
- (36): Sicherheitsbauteile
- (37): Sicherheitsbauteile

## Patentansprüche

1. Verfahren zur Steuerung von sicherheitsrelevanten Prozessen wenigstens eines Arbeitsgeräts mittels eines Steuerungssystems, welches wenigstens eine Monitoreinheit, mittels derer in Abhängigkeit von Schaltzuständen von Sicherheitsbauteilen das Arbeitsgerät aktiviert oder deaktiviert werden, aufweist, **dadurch gekennzeichnet, dass** an die Monitoreinheit (8) ein Inbetriebnahmemodul (10) angeschlossen werden kann, dass die maximale Anzahl von anschließbaren Sicherheitsbauteilen (3) eine Maximalkonfiguration bildet, dass in der Monitoreinheit (8) und/oder in dem Inbetriebnahmemodul eine Optionsliste mit einer Anzahl von Optionen abgespeichert wird, wobei jede Option eine innerhalb der Maximalkonfiguration liegende Erweiterung einer Basiskonfiguration bildet, die durch eine Teilmenge der Maximalkonfiguration definiert ist und dass in dem Inbetriebnahmemodul eine Option aus der Optionsliste zur Generierung einer aktuellen Konfiguration für den Betrieb des Steuerungssystems (1) ausgewählt werden kann, wobei die Gültigkeit der Konfiguration in der Monitoreinheit (8) überprüft wird.

2. Verfahren nach Anspruch 1, **dadurch gekennzeichnet, dass** zur Überprüfung der Gültigkeit einer ausgewählten Konfiguration dieser eine Prüfziffer zugeordnet wird, welche in der Monitoreinheit (8) und / oder von einer Bedienperson mit einem Sollwert verglichen wird.

3. Verfahren nach Anspruch 1, **dadurch gekennzeichnet, dass** die Maximalkonfiguration in der Monitoreinheit abgespeichert ist.

4. Verfahren nach Anspruch 3, **dadurch gekennzeichnet, dass** zur Überprüfung der Gültigkeit einer ausgewählten Konfiguration diese in der Monitoreinheit (8) mit den Optionen der Optionsliste verglichen wird.

5. Verfahren nach einem der Ansprüche 1 - 4, **dadurch gekennzeichnet, dass** das Steuerungssystem von einem nach dem Master-Slave-Prinzip arbeitenden Bussystem gebildet wird.

6. Verfahren nach einem der Ansprüche 1-5, **dadurch gekennzeichnet, dass** die Sicherheitsbauteile (3) Slaves des Bussystems bilden.

7. Verfahren nach einem der Ansprüche 1 - 6, **dadurch gekennzeichnet, dass** die Sicherheitsbauteile (3) von Lichtschranken, Lichtgittern und /oder Not-Aus-Schaltern gebildet werden.

8. Verfahren nach einem der Ansprüche 1 - 7, **dadurch gekennzeichnet, dass** die Monitoreinheit (8) von einer redundanten Rechnereinheit gebildet wird.

9. Verfahren nach Anspruch 8, **dadurch gekennzeichnet, dass** die Monitoreinheit (8) die über das Bussystem übertragenen Signale zur Ermittlung der Schaltzustände der Sicherheitsbauteile (3) abhört.

10. Verfahren nach einem der Ansprüche 1 - 9, **dadurch gekennzeichnet, dass** das Inbetriebnahmemodul (10) von einem Personalcomputer gebildet wird.

11. Verfahren nach einem der Ansprüche 1 - 10, **dadurch gekennzeichnet, dass** zur Durchführung einer Inbetriebnahme die Maximalkonfiguration und die Optionsliste in das Inbetriebnahmemodul (10) eingelesen werden.

12. Verfahren nach einem der Ansprüche 1 - 11, **dadurch gekennzeichnet, dass** nach Auswahl einer Option in dem Inbetriebnahmemodul (10) eine Download-Prozedur in der Monitoreinheit (8) gestartet wird, mittels derer die der Option entsprechende Konfiguration von Sicherheitsbauteilen (3) implementiert wird.

13. Verfahren nach Anspruch 11, **dadurch gekennzeichnet, dass** mit der Download-Prozedur in der Monitoreinheit (8) eine Maschinenkonfigurationsdatei erstellt wird.

14. Verfahren nach einem der Ansprüche 12 oder 13, **dadurch gekennzeichnet, dass** über die Monitoreinheit (8) nach erfolgter Download-Prozedur eine Optionsdatei mit der ausgewählten Option zu deren Überprüfung und Freigabe ausgegeben wird.

15. Verfahren nach einem der Ansprüche 12 - 14, **dadurch gekennzeichnet, dass** über die Monitoreinheit (8) nach erfolgter Download-Prozedur die Maschinenkonfigurationsdatei ausgebbar ist.

16. Verfahren nach einem der Ansprüche 1 - 15, **dadurch gekennzeichnet, dass** die Maximalkonfiguration von einer Liste der maximal anschließbaren Sicherheitsbauteilen (3) gebildet wird.

17. Verfahren nach Anspruch 16, **dadurch gekennzeichnet, dass** die Basiskonfiguration von einer der Maximalkonfiguration zugeordneten Basiswertfolge gebildet wird, deren Elemente binäre Werte 0 oder 1 annehmen, wobei durch Zuweisung des Werts 0 eines Elements zu einem Sicherheitsbauteil (3) der Maximalkonfiguration dieses inaktiv ist, und wobei durch Zuweisung des Werts 1 eines Elements zu einem Sicherheitsbauteil (3) der Maximalkonfiguration dieses aktiv ist.

18. Verfahren nach Anspruch 17, **dadurch gekennzeichnet, dass** jede Option durch eine der Basiskonfiguration zugeordneten Optionswertfolge von Werten -1, 0, +1 gebildet wird, wobei mit dem Wert 0 ein in der Basiskonfiguration definierter Wert übernommen wird, mit dem Wert +1 ein in der Basiskonfiguration als aktiv oder inaktiv definiertes Sicherheitsbauteil (3) als aktiviertes Sicherheitsbauteil (3) in die Option aufgenommen wird, und mit dem Wert -1 ein in der Basiskonfiguration als aktiv oder inaktiv definiertes Sicherheitsbauteil (3) als inaktiviertes Sicherheitsbauteil (3) in die Option aufgenommen wird.

## Claims

1. Method of controlling safety-relevant processes of at least one working apparatus by means of a control system, which comprises at least one monitoring unit, by means of which the working apparatus is activated or deactivated in dependence on switching states of safety components, **characterised in that** a module (10) for placing in operation can be connected with the monitoring unit (8), that the maximum number of connectible safety components (3) forms a maximum configuration, that an options list with a number of options is stored in the monitoring unit (8) and/or in the module for placing in operation, wherein each option forms an extension, which lies within the maximum configuration, of a basic configuration, which is defined by a subset of the maximum configuration and that an option from the options list for generation of a current configuration for operation of the control system (1) can be selected in the module for placing in operation, wherein the validity of the configuration is checked in the monitoring unit (8).

2. Method according to claim 1, **characterised in that** for checking the validity of a selected configuration a check number is associated therewith and is compared in the monitoring unit (8) and/or by an operator with a target value.

3. Method according to claim 1, **characterised in that** the maximum configuration is stored in the monitoring unit.

4. Method according to claim 3, **characterised in that** for checking the validity of the selected configuration this is compared in the monitoring unit (8) with the options of the options list.

5. Method according to one of claims 1 to 4, **characterised in that** the control system is formed by a bus system operating according to the master-slave principle.

6. Method according to one of claims 1 to 5, **characterised in that** the safety components (3) form slaves of the bus system.

7. Method according to one of claims 1 to 6, **characterised in that** the safety components (3) are formed by light barriers, light gratings and/or emergency off switches.

8. Method according to one of claims 1 to 7, **characterised in that** the monitoring unit (8) is formed by a redundant computer unit.

9. Method according to claim 8, **characterised in that** the monitoring unit (8) listens to signals, which are transmitted by way of the bus system, for determining the switching states of the safety components (3).

10. Method according to one of claims 1 to 9, **characterised in that** the module (10) for placing in operation is formed by a personal computer.

11. Method according to one of claims 1 to 10, **characterised in that** for performance of placing in operation the maximum configuration and the options list are read into the module (10) for placing in operation.

12. Method according to one of claims 1 to 11, **characterised in that** after selection of an option in the module (10) for placing in operation a download procedure is started in the monitoring unit (8), by means of which the configuration of safety components (3) corresponding with the option is implemented.

13. Method according to claim 11, **characterised in that** a machine configuration file is created in the monitoring unit (8) with the download procedure.

14. Method according to one of claims 12 and 13, **characterised in that** an options file with the selected option is, for checking thereof and release, output by way of the monitoring unit (8) after the download procedure has been carried out.

15. Method according to one of claims 12 to 14, **characterised in that** the machine configuration file can be output by way of the monitoring unit (8) after the download procedure has been carried out.

16. Method according to one of claims 1 to 15, **characterised in that** the maximum configuration is formed by a list of the maximum connectible safety components (3).

17. Method according to claim 16, **characterised in that** the basic configuration is formed by a basic value sequence which is associated with the maximum configuration and the elements of which adopt binary values 0 and 1, wherein through allocation of the value 0 of an element to a safety component (3) the maximum configuration thereof is inactive and wherein through allocation of the value 1 of an element to a safety component (3) the maximum configuration thereof is active.

18. Method according to claim 17, **characterised in that** each option is formed by an options value sequence, which is associated with the basic configuration, of values -1, 0, +1, wherein with the value 0 a value defined in the basic configuration is taken over, with the value +1 a safety component (3), which is defined as active or inactive in the basic configuration, is taken up in the option as activated safety component (3) and with the value -1 a safety component (3), which is defined in the basic configuration as active or inactive, is taken up in the option as non-activated safety component (3).

## Revendications

1. Procédé pour commander des processus de sécurité d'au moins un appareil de travail au moyen d'un système de commande, lequel comporte au moins une unité de contrôle au moyen de laquelle l'appareil de travail est activé ou désactivé en fonction d'états de commutation de composants de sécurité, **caractérisé en ce qu'**un module de mise en service (10) peut être connecté à l'unité de contrôle (8), que le nombre maximal de composants de sécurité (3) connectables forme une configuration maximale, qu'une liste d'options avec un nombre d'options est enregistrée dans l'unité de contrôle (8) et/ou le module de mise en service, chaque option formant, dans les limites de la configuration maximale, une extension d'une configuration de base qui est définie par un sous-ensemble de la configuration maximale et qu'il est possible de sélectionner dans le module de mise en service une option de la liste d'options pour générer une configuration actuelle pour le fonctionnement du système de commande (1), la validité de la configuration étant vérifiée dans l'unité de contrôle (8).

2. Procédé selon la revendication 1, **caractérisé en ce que** pour vérifier la validité d'une configuration sélectionnée, on lui associe un chiffre de contrôle qui est comparé avec une valeur de consigne dans l'unité de contrôle (8) et/ou par un(e) opérateur/trice.

3. Procédé selon la revendication 1, **caractérisé en ce que** la configuration maximale est enregistrée dans l'unité de contrôle.

4. Procédé selon la revendication 3, **caractérisé en ce que** pour vérifier la validité d'une configuration sélectionnée, celle-ci est comparée dans l'unité de contrôle (8) avec les options de la liste d'options.

5. Procédé selon l'une des revendications 1 à 4, **caractérisé en ce que** le système de commande est formé par un système de bus fonctionnant selon le principe maître-esclave.

6. Procédé selon l'une des revendications 1 à 5, **caractérisé en ce que** les composants de sécurité (3) forment des esclaves du système de bus.

7. Procédé selon l'une des revendications 1 à 6, **caractérisé en ce que** les composants de sécurité (3) sont formés de barrières lumineuses, de rideaux lumineux et/ou d'interrupteurs d'arrêt d'urgence.

8. Procédé selon l'une des revendications 1 à 7, **caractérisé en ce que** l'unité de contrôle (8) est formée d'une unité informatique redondante.

9. Procédé selon la revendication 8, **caractérisé en ce que** l'unité de contrôle (8) écoute les signaux transmis sur le système de bus pour déterminer les états de commutation des composants de sécurité (3).

10. Procédé selon l'une des revendications 1 à 9, **caractérisé en ce que** le module de mise en service (10) est formé d'un ordinateur personnel.

11. Procédé selon l'une des revendications 1 à 10, **caractérisé en ce que** pour effectuer une mise en service, la configuration maximale et la liste d'options sont chargées dans le module de mise en service (10).

12. Procédé selon l'une des revendications 1 à 11, **caractérisé en ce qu'**après la sélection d'une option dans le module de mise en service (10), une procédure de téléchargement est démarrée dans l'unité de contrôle (8), au moyen de laquelle la configuration de composants de sécurité (3) correspondant à l'option est implémentée.

13. Procédé selon la revendication 11, **caractérisé en ce qu'**un fichier de configuration de machine est généré dans l'unité de contrôle (8) avec la procédure de téléchargement.

14. Procédé selon l'une des revendications 12 ou 13, **caractérisé en ce qu'**après que la procédure de téléchargement a eu lieu, un fichier d'option avec l'option sélectionnée est délivré par l'unité de contrôle (8) en vue de sa vérification et de sa validation.

15. Procédé selon l'une des revendications 12 à 14, **caractérisé en ce qu'**après que la procédure de téléchargement a eu lieu, le fichier de configuration de machine peut être délivré par l'unité de contrôle (8).

16. Procédé selon l'une des revendications 1 à 15, **caractérisé en ce que** la configuration maximale est formée d'une liste des composants de sécurité (3) connectables au maximum.

17. Procédé selon la revendication 16, **caractérisé en ce que** la configuration de base est formée d'une suite de valeurs de base associée à la configuration maximale dont les éléments prennent des valeurs binaires 0 ou 1, sachant que si la valeur 0 d'un élément est affectée à un composant de sécurité (3) de la configuration maximale celui-ci est inactif et que si la valeur 1 d'un élément est affectée à un composant de sécurité (3) de la configuration maximale celui-ci est actif.

18. Procédé selon la revendication 17, **caractérisé en ce que** chaque option est formée d'une suite de valeurs d'option de valeurs -1, 0, +1 associée à la configuration de base, sachant qu'avec la valeur 0 une valeur définie dans la configuration de base est prise en compte, qu'avec la valeur +1 un composant de sécurité (3) défini comme actif ou inactif dans la configuration de base est inclus dans l'option en tant que composant de sécurité (3) activé, et qu'avec la valeur -1 un composant de sécurité (3) défini comme actif ou inactif dans la configuration de base est inclus dans l'option en tant que composant de sécurité (3) inactivé.
